# EUROPEAN PATENT SPECIFICATION

(11) **EP 3 813 205 B1**
(45) Date of publication and mention of the grant of the patent: **26.06.2024**
(21) Application number: 20193683.8
(22) Date of filing: 31.08.2020
(51) Int. Cl.: H01R 13/52, H01R 107/00, H01R 13/504, H01R 43/00

(54) **MAT SEAL FOR AN ELECTRICAL CONNECTOR**
MATTENDICHTUNG FÜR EINEN ELEKTRISCHEN VERBINDER
JOINT D'ÉTANCHÉITÉ POUR CONNECTEUR ÉLECTRIQUE

(30) Priority: 05.09.2019 DE 102019213482
(43) Date of publication of application: 28.04.2021
(73) Proprietor: TE Connectivity Germany GmbH, 64625 Bensheim (DE)
(72) Inventor: RIPPER, Hartmut, 64625 Bensheim (DE); WAGNER, Joerg, 64625 Bensheim (DE)
(74) Representative: Grünecker Patent- und Rechtsanwälte PartG mbB

(56) References cited:
- EP-A2- 1 715 551
- DE-A1- 19 828 982
- DE-T2- 69 516 947
- US-A1- 2019 112 026

## Description

### Field of the invention

The present invention relates to a mat seal for an electrical connector. It also relates to a method of manufacturing a mat seal for an electrical connector.

### State of the art

Connectors are often used in automotive engineering, for example, to reliably connect a number of electrical lines with each other both electrically and mechanically. The connector comprises a plug and a mating plug which engage with each other in a mechanically and electrically connected state. The plug and the mating plug each have an electrically non-conductive housing, for example, made of plastic. The housings are geometrically designed in such a way that a mechanical and electrical connection is obtained between the plug and the mating plug after they are plugged together.

A large number of cables (or wires or contacts) are typically inserted into the plug and mating plug, which are mechanically connected to the housing of the plug or mating plug, respectively. When the plug and mating plug are mated with each other, the ends of the cables held in the plug are brought into contact with the ends of the cables held in the mating plug, thus providing a reliable electrical contact between the cables of the plug and those of the mating plug. The ends of the cables may also have suitably shaped contact pins for mechanical and electrical contact between the respective cable ends.

For such connectors, it may be necessary to protect the contact points between the cable ends from the penetration of dirt or moisture, especially in automotive applications. For this purpose, connectors are often equipped with mat seals. The mat seal is typically made of an elastic material, such as a silicone, rubber or polymer material. The mat seal is held in the housing of the plug and/or mating plug, for example, by means of a pressure plate.

In connectors that are intended to connect a large number of contacts or cables, the mat seals have many through-holes. A cable can pass through each of these trough-holes from an outside of the connector to an inside of the connector. The through-holes of the mat seal have cross sections such that the mat seal fits tightly against a fed through cable in the area of a circumference of a through-hole. For this purpose, the respective through-hole typically has, at least in partial areas, a smaller internal cross section than the cross section of a cable to be fed through. When the cables are fed through the mat seal, frictional forces which occur due to the tight-fitting mat seal must be overcome. Elastic deformation and compression of the material within the sealing mat occur. Particularly, if the diameter of a cable to be fed through is significantly larger than the cross-section of the corresponding through-hole, the material compressions that occur can generate strong radial forces applied to the cable, which can result in damages when the cable is fed through the through-hole. However, damages of the through-holes result in that sealing against moisture and dirt can no longer be guaranteed.

Furthermore, the deformations can lead to such a displacement of adjacent through-holes that incorrect installation and thus incorrect contacts and also damage to cables, wires or contacts which are to be guided through the through-holes but hit the displaced material of the mat seal can occur.

Therefore, it is an object of the present invention to provide a mat seal for a multipole connector which guarantees a correct electrical contact and, after the plug and mating plug have been connected, ensures and permanently maintains a reliable seal against moisture and dirt.

DE 198 28 982 A1 relates to the sealing for an electrical plug connection which is a mat with at least two passage openings for electrical cables. It has a grid frame of a mechanically stiff material with high temperature resistance, coated with a sprayed elastomer.

### Description of the invention

The above-mentioned object is addressed by providing a mat seal for an electrical connector according to claim 1.

Thus the through-holes extending through the mat seal extend through the first material layer, the meshes of the grid and the second material layer. The meshes of the grid can be partially filled with the second and/or third material.

Here and in the following, the term "grid" also includes a grid band or net or net band; no distinction is made between these terms here. In other words, the grid can also be a grid band or net or net band (e.g. a fabric band).

The plug and mating plug of the connector are mechanically and electrically connected to each other through the through-holes of the mat seal, for example, by cables, wires or contacts. The grid can be much thinner than the first and second material layers. In accordance with the invention, it only extends in the through-hole direction by a maximum of 1/100 to 1/10, in particular, 1/100 to 1/80 or 1/50, or 1/80 to 1/20, for example, 1/60 to 1/30, of the thickness of the first material layer and/or the thickness of the second material layer in the through-hole direction. In particular, the grid can be a fabric band of the mentioned thickness. The thickness of the first and the second material layer can be the same or different from each other.

In accordance with the invention, the provision of the grid with a less compressible material (first material) compared to the materials of the first and second material layers (second and third material) provides the advantages of an overall reduced and controlled material deformation when feeding through the electrical connections (cables, wires or contacts), an increased stiffness and strength of the mat seal and consequently increased safety against installation faults (non-contact or faulty contact) and tightness, in particular, against moisture/water.

The second and third materials can be the same. In particular, the first material layer can be formed integrally with the second material layer. In this case, the grid may be overmoulded by the first material layer and the second material layer.

In accordance with the invention, the grid consists of a fibre net, in particular, a fibre net made of synthetic resin. Such a grid can be produced relatively easily and overmoulded with exact positioning. The second material of the first material layer and the third material of the second material layer can be or comprise an elastic silicone, rubber or polymer material.

In all of the above-described embodiments, the through-holes may have any geometric (surface) shape, for example, round or rectangular shapes. All through-holes may have the same diameter/cross sectional areas. In this case, the mesh size of the grid in the above mentioned embodiments may be larger than the diameter/cross sectional areas of the through-holes in the first and second material layers. In this way a contact with a controlled deformation of the second and third materials can be reliably achieved.

It should be noted that the cross-sectional area of each through-hole in both the first material layer and the second material layer may vary in the through-hole direction, for example, due to the provision of a sealing lip. Here and hereafter, "the cross-sectional area" or "the diameter" of a through-hole in the first or second material layer is understood to be the largest cross-sectional area or diameter in the through-hole direction in the case that a cross-sectional area or diameter varies in the through-hole direction.

It should also be noted that the meshes may be of square or circular shape (same mesh size in longitudinal and transverse direction perpendicular to the through-hole direction). However, other geometric shapes are also possible, so that the mesh size of the grid in the plane perpendicular to the direction of the through-hole in the longitudinal direction is different from that in the transverse direction. In this case, the "mesh size" of the grid here and in the following is understood to be the smaller one of the mesh size in the longitudinal direction and that in the transverse direction. In this case, the mesh size or, respectively, the mesh size in the longitudinal direction and the mesh size in the transverse direction shall be considered constant (i.e. they do not vary in the longitudinal or transverse direction).

However, it can also be advantageous to feed cables, wires or contacts with different cross-sections through the mat seal in the case of multipole connectors where a large number of cables, wires or contacts are to be connected to each other. It can therefore be advantageous that the through-holes have different cross-sectional areas. In this case, the grid in the above described embodiments may have a constant mesh size which is larger than the largest diameter or the largest cross-sectional area of the through-holes in the first and second material layers. Alternatively, the mesh size may vary in the transverse or longitudinal direction according to the different cross-sectional areas of the through-holes. In any case, for each through-hole, the cross-sectional area of the grid mesh associated with it is larger than the cross-sectional area of the through-hole. Again, contact between the plug and mating plug of the connector can be reliably achieved with a controlled deformation of the second and third materials.

Further, a multipole connector, for example, with 80 contact poles, is provided with a plug and a mating plug and a mat seal according to one of the examples described above, which, in the closed state of the connector (i.e. the plug is engaged with the mating plug), is arranged between the plug and mating plug, wherein the mat seal provides a through-hole for each pole (pin). The mat seal may be retained by the plug and/or mating plug by means of a suitable retaining device. The above-mentioned object is also addressed by a method of manufacturing a mat seal for an electrical connector according to claim 10.

When forming the first and second material layers, grid meshes of the grid can be partially filled with the second and/or third material.

Formation of the first and second material layers may include overmolding the grid with the second and third materials. The formation of the grid may include injection moulding of the grid.

Forming the grid may comprise forming a web of fabric band (fabric web) and the method may further comprise overmoulding the web of fabric band and dividing the overmoulded web of fabric band to form a plurality of mat seals (and hence the above-mentioned mat seal).

According to an embodiment, in the method one of the above described examples, forming the grid comprises forming a fabric web and the method further comprises cutting a fabric band from the fabric web to provide the grid. A plurality of grids can be produced from the fabric web which can be used to produce a plurality of mat seals in mass production.

Furthermore, a mat seal for an electrical connector, which can be manufactured according to one of the above-described examples of the method of manufacturing a mat seal for an electrical connector according to the invention, is provided.

Further features and exemplary embodiments as well as advantages of the present invention are explained in more detail below with reference to the drawings. It is understood that the embodiments do not exhaust the scope of the present invention. It is further understood that some or all of the features described below can be combined with each other in other ways.
Figure 1 shows a mat seal according to an embodiment of the present invention.
Figure 2 shows a grid serving as a component of a mat seal according to an embodiment of the present invention.
Figure 3 shows a connector with a plug, a mating plug and a mat seal according to an embodiment of the present invention.
Figure 4 is a flow chart illustrating a method of manufacturing a mat seal for an electrical connector according to a embodiment of the present invention.
Figure 5 is a flow chart illustrating a method of manufacturing a mat seal for an electrical connector according to another embodiment of the present invention.

The present invention provides a mat seal for a connector comprising a plug and a mating plug, wherein the mat seal guarantees a reliable mechanical and electrical contact of plug and mating plug through the mat seal with secure sealing against water and dirt. The mat seal can be used in automotive applications, for example.

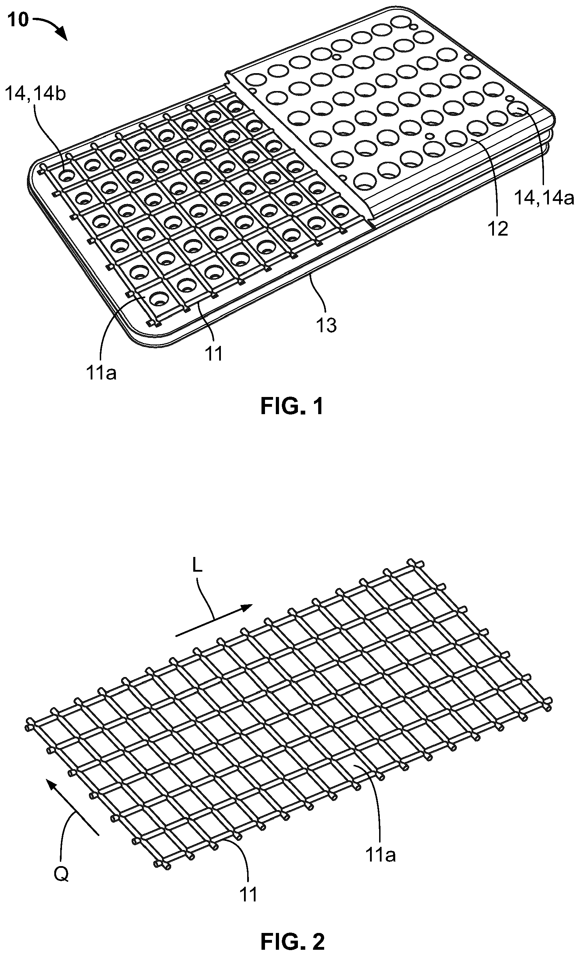

An embdiment of a mat seal 10 according to the present invention is shown in Figure 1. The mat seal 10 comprises a grid 11 (or grid band or net or net band), which is arranged between a first material layer 12 and a second material layer 13. The mat seal 10 has through-holes 14 formed partly in the first material layer 12 (14a) and partly in the second material layer 12 (14b) and extending through grid meshes 11a of the grid 11 in the through-hole direction (i.e. substantially perpendicular to the grid meshes 11a). The cross sections of the through-holes 14, 14a, 14b may vary within the first material layer 12 and/or second material layer 13, for example, decrease towards the grid 11, and sealing lips may be formed in through-holes 14, 14a, 14b in the vicinity of the grid 11.

The first material layer 12 and the second material layer 13 may be formed from the same material and, in particular, in one piece. For example, the first material layer 12 and the second material layer 13 may be made of or comprise a silicone, rubber or polymer material. The grid 11 may be made of or include a plastic material. Such a grid 11 is also shown in Figure 2 and comprises grid meshes 11a with regular mesh sizes in the transverse direction Q and/or longitudinal direction L (as shown in Figures 1 and 2) or alternatively with irregular mesh sizes in the transverse direction Q and/or longitudinal direction L. The grid may, for example, be provided in the form of a fibre net made of plastic or a fabric band of plastic.

According to the invention, the material selected for the grid 11 is less compressible than the material selected for the first material layer 12 and the second material layer 13. The material selected for the grid 11, thus, has a higher compression modulus than the material selected for the first material layer 12 and the second material layer 13.

By providing such kind of a grid 11, a deformation of the material of the first material layer 12 and second material layer 13 is controlled and reduced when cables (leads, contacts) are fed through the through-holes 14, 14a, 14b. In particular, a deformation of the material of the first material layer 12 and second material layer 13 in the plane perpendicular to the through-hole direction is controlled and reduced when a cable is fed through a through-hole through the grid. In particular, it is possible to prevent, when a cable is passed through one of the through-holes 14, 14a, 14b, a significant displacement of one or more adjacent through-holes 14, 14a, 14b that would cause a faulty contact and damage to the material of the first or second material layer when contacting is attempted.

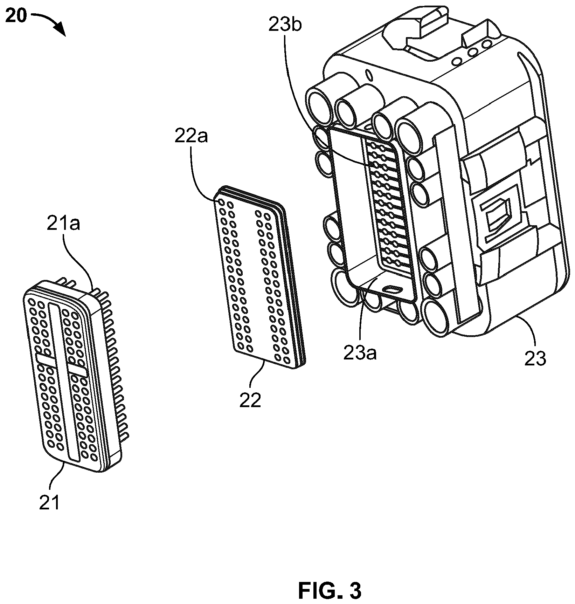

A mat seal as described above can be used in the connector 20 shown in Figure 3. As shown in Figure 3, an embodiment of a connector 20 according to the invention comprises a multipole plug 21 with a plurality of contacts 21a, a mat seal 22 with through-holes 22a, for example, the mat seal 11 shown in Figure 1, and a mating plug 23. The mat seal 22 can be received in a receptacle 23a of the mating plug 23. For example, when the connector 20 is closed, i.e. when the plug 21 and mating plug 23 are in mechanical engagement, cables (not shown) connected to contacts 21a of connector 21 are connected to contact receptacles (contacts) 23b of the mating plug 23 through the through-holes 22a of the mat seal 22.

For example, the mat seal 10 shown in Figure 1 or the mat seal 22 shown in Figure 3 can be made using a multi-component injection molding process with overmolding of the grid. This can be done using an injection moulding machine equipped with two independently controlled injection units and a corresponding control device.

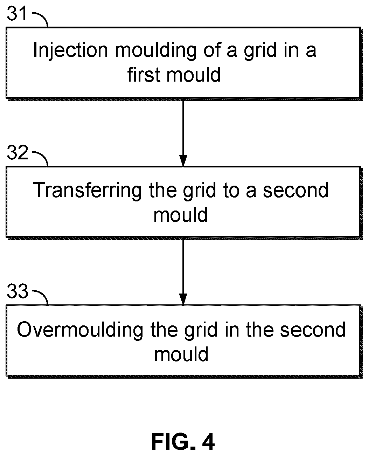

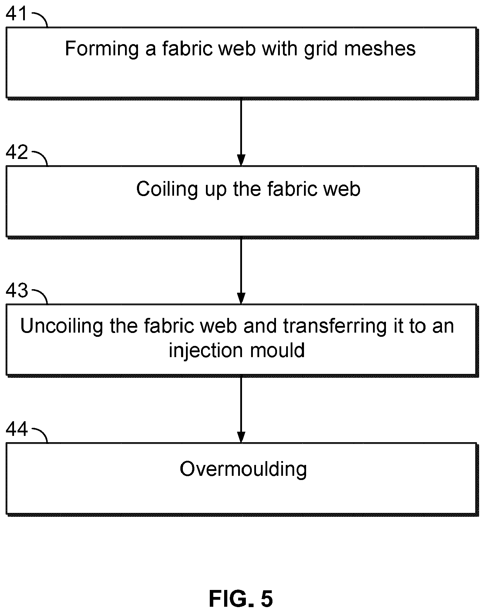

Two embodiments of a method of manufacturing a mat seal for an electrical connector, for example, the mat seal 10 shown in Figure 1 or the mat seal 22 shown in Figure 3, are illustrated in the flow diagrams of Figures 4 and 5.

According to the embodiment shown in Figure 4, a grid, such as grid 11 shown in Figures 1 and 2, is injection moulded in a first injection mould 31. The injection moulded grid is transferred to a second injection mould 32. In this second injection mould, the grid is overmoulded with an elastic material, such as the material of the first and second material layers 12, 13 shown in Figure 1. In the second injection mould, mandrels may be provided so that through holes can be made in the grid seal during forced demoulding.

According to the embodiment shown in Figure 5, a grid in the form of a fabric band is used. A fabric web is formed 41, the fabric web having grid meshes. The fabric web can be temporarily stored on a roll 42.

In order to use the fabric web for the production of a large number of mat seals, for example, of the type shown in Figures 1 and 3, it is at least partially uncoiled again and fed in unrolled condition to an injection mould 43. By overmoulding in the injection mould 44 with a suitable material, for example, silicone, a mat seal with a fabric band contained therein can then be produced. In principle, the fabric web can be tailored into individual fabric bands and a mat seal can be produced by overmoulding each fabric band, or a larger section of the fabric web is overmoulded and then the overmoulded section of the fabric web is tailored to form individual mat seals therefrom.

### Reference signs:

10, 22 mat seal
11 grid
11a grid mesh
12 first material layer
13 second material layer
14, 14a, 14b, 22a through-holes
20 connector
21 plug
21a contacts
23 mating plug
23a receptacle
23b contact receptacles

## Claims

1. A mat seal (10, 22) for an electrical connector (20), comprising
a plurality of through-holes (14, 14a, 14b, 22a) extending in a through-hole direction through the mat seal (10, 22);
a grid (11) of a first material having grid meshes (11a) and being arranged such that the through-holes (14, 14a, 14b, 22a) extend through the grid meshes (11a);
a first material layer (12) of a second material disposed on a first side of the grid (11); and a second material layer (13) of a third material disposed on a second side of the grid (11) opposite the first side; and wherein
the first material of the grid (11) has a greater compression modulus than the second material of the first material layer (12) and the third material of the second material layer (13),
**characterized in that**
the grid (11) is made of a fabric band or fibre net, in particular, a fibre net of synthetic resin and
**in that** the thickness of the grid (11) in the through-hole direction is at most 1/100 to 1/10 or 1/100 to 1/80 or 1/50, in particular, 1/60 to 1/30, of the thickness of the first material layer (12) in the through-hole direction and the thickness of the second material layer (13) in the through-hole direction.

2. The mat seal (10, 22) according to claim 1, wherein the first material layer (12) is formed integrally with the second material layer (13).

3. The mat seal (10, 22) according to claim 2, wherein the grid (11) is overmolded with the first and second material layers (13).

4. The mat seal (10, 22) according to one of the preceding claims, wherein the second and third materials are or comprise silicone, rubber or polymer materials and, in particular, the second material and the third material are identical to each other.

5. The mat seal (10, 22) according to one of the preceding claims, wherein each of the through-holes (14, 14a, 14b, 22a) has the same cross-sectional area perpendicular to the through-hole direction.

6. The mat seal (10, 22) according to claim 5, wherein the mesh size of the grid (11) is larger than the cross-sectional areas of the through-holes (14, 14a, 14b, 22a) in the first and second material layers (12, 13).

7. The mat seal (10, 22) according to one of the preceding claims, wherein the through-holes (14, 14a, 14b, 22a) have different cross-sectional areas perpendicular to the through-hole direction.

8. The mat seal (10, 22) according to claim 7, wherein
the grid (11) has a constant mesh size which is larger than the largest cross-sectional area of the through-holes (14, 14a, 14b, 22a) in the first and second material layers (12, 13); and/or
for each through-hole (14, 14a, 14b, 22a) the cross-sectional area of the mesh (11a) of the grid (11) associated therewith is larger than the cross-sectional area of the through-hole.

9. A multipole connector (20) comprising a plug (21) and a mating plug (23) and a mat seal (10, 22) according to one of the preceding claims, which in the closed state of the connector (20) is arranged between the plug (21) and the mating plug (23).

10. A method of manufacturing a mat seal (10, 22) for an electrical connector (20) comprising the steps of:
forming a grid (11) from a first material;
forming a first material layer (12) of a second material on a first side of the grid (11); and
forming a second material layer (13) of a third material on a second side of the grid (11) opposite the first side; and wherein
the first material of the grid (11) has a greater compression modulus than the second material of the first material layer (12) and the third material of the second material layer (13) and
**characterized in that**
the grid (11) is made of a fabric band or fibre net, in particular, a fibre net of synthetic resin and
**in that** the thickness of the grid (11) in the through-hole direction is at most 1/100 to 1/10 or 1/100 to 1/80 or 1/50, in particular, 1/60 to 1/30, of the thickness of the first material layer (12) in the through-hole direction and the thickness of the second material layer (13) in the through-hole direction.

11. The method according to claim 10, wherein forming the first and second material layers (13) comprises overmoulding the grid (11) with the second and third materials.

12. The method according to claim 10 or 11, wherein forming the grid (11) comprises injection molding the grid (11).

13. The method according to any one of claims 10 to 12, wherein forming the grid (11) comprises forming a fabric web, and wherein the method further comprises overmolding the fabric web and dividing the overmolded fabric web to produce a plurality of mat seals (10, 22).

14. The method according to any one of claims 10 to 12, wherein forming the grid (11) comprises forming a fabric web, and wherein the method further comprises separating a fabric band from the fabric web to provide the grid (11).

## Patentansprüche

1. Mattendichtung (10, 22) für einen elektrischen Steckverbinder (20), umfassend
eine Vielzahl von Durchgangslöchern (14, 14a, 14b, 22a), die sich in einer Durchgangslochrichtung durch die Mattendichtung (10, 22) erstrecken;
ein Gitter (11) aus einem ersten Material, das Gittermaschen (11a) aufweist und so angeordnet ist, dass die Durchgangslöcher (14, 14a, 14b, 22a) durch die Gittermaschen (11a) verlaufen;
eine erste Materialschicht (12) aus einem zweiten Material, die auf einer ersten Seite des Gitters (11) angeordnet ist; und
eine zweite Materialschicht (13) aus einem dritten Material, die auf einer zweiten Seite des Gitters (11) gegenüber der ersten Seite angeordnet ist; und wobei
das erste Material des Gitters (11) ein größeres Kompressionsmodul aufweist als das zweite Material der ersten Materialschicht (12) und das dritte Material der zweiten Materialschicht (13),
**dadurch gekennzeichnet, dass**
das Gitter (11) aus einem Gewebeband oder Fasernetz, insbesondere einem Fasernetz aus Kunstharz, besteht und dass
die Dicke des Gitters (11) in der Durchgangslochrichtung höchstens 1/100 bis 1/10 oder 1/100 bis 1/80 oder 1/50, insbesondere 1/60 bis 1/30, der Dicke der ersten Materialschicht (12) in der Durchgangslochrichtung und der Dicke der zweiten Materialschicht (13) in der Durchgangslochrichtung beträgt.

2. Mattendichtung (10, 22) nach Anspruch 1, wobei die erste Materialschicht (12) einstückig mit der zweiten Materialschicht (13) ausgebildet ist.

3. Mattendichtung (10, 22) nach Anspruch 2, bei der das Gitter (11) mit der ersten und zweiten Materialschicht (13) überspritzt ist.

4. Mattendichtung (10, 22) nach einem der vorhergehenden Ansprüche, wobei das zweite und das dritte Material Silikon-, Gummi- oder Polymermaterialien sind oder umfassen und insbesondere das zweite Material und das dritte Material identisch sind.

5. Mattendichtung (10, 22) nach einem der vorhergehenden Ansprüche, wobei jedes der Durchgangslöcher (14, 14a, 14b, 22a) die gleiche Querschnittsfläche senkrecht zur Durchgangslochrichtung aufweist.

6. Mattendichtung (10, 22) nach Anspruch 5, wobei die Maschenweite des Gitters (11) größer ist als die Querschnittsflächen der Durchgangslöcher (14, 14a, 14b, 22a) in der ersten und zweiten Materialschicht (12, 13).

7. Mattendichtung (10, 22) nach einem der vorhergehenden Ansprüche, wobei die Durchgangslöcher (14, 14a, 14b, 22a) senkrecht zur Durchgangslochrichtung unterschiedliche Querschnittsflächen aufweisen.

8. Mattendichtung (10, 22) nach Anspruch 7, wobei
das Gitter (11) eine konstante Maschenweite hat, die größer ist als die größte Querschnittsfläche der Durchgangslöcher (14, 14a, 14b, 22a) in der ersten und zweiten Materialschicht (12, 13); und/oder
für jedes Durchgangsloch (14, 14a, 14b, 22a) die Querschnittsfläche der Masche (11a) des dazugehörigen Gitters (11) größer ist als die Querschnittsfläche des Durchgangslochs.

9. Mehrpoliger Steckverbinder (20) mit einem Stecker (21) und einem Gegenstecker (23) und einer Mattendichtung (10, 22) nach einem der vorhergehenden Ansprüche, die im geschlossenen Zustand des Steckverbinders (20) zwischen dem Stecker (21) und dem Gegenstecker (23) angeordnet ist.

10. Verfahren zur Herstellung einer Mattendichtung (10, 22) für einen elektrischen Steckverbinder (20), das die folgenden Schritte umfasst:
Herstellung eines Gitters (11) aus einem ersten Material;
Ausbilden einer ersten Materialschicht (12) aus einem zweiten Material auf einer ersten Seite des Gitters (11); und
Ausbilden einer zweiten Materialschicht (13) aus einem dritten Material auf einer zweiten Seite des Gitters (11) gegenüber der ersten Seite; und wobei
das erste Material des Gitters (11) ein größeres Kompressionsmodul aufweist als das zweite Material der ersten Materialschicht (12) und das dritte Material der zweiten Materialschicht (13) und
**dadurch gekennzeichnet, dass**
das Gitter (11) aus einem Gewebeband oder Fasernetz, insbesondere einem Fasernetz aus Kunstharz, besteht und dass
die Dicke des Gitters (11) in der Durchgangslochrichtung höchstens 1/100 bis 1/10 oder 1/100 bis 1/80 oder 1/50, insbesondere 1/60 bis 1/30, der Dicke der ersten Materialschicht (12) in der Durchgangslochrichtung und der Dicke der zweiten Materialschicht (13) in der Durchgangslochrichtung beträgt.

11. Verfahren nach Anspruch 10, wobei die Bildung der ersten und zweiten Materialschicht (13) das Überspritzen des Gitters (11) mit dem zweiten und dritten Material umfasst.

12. Verfahren nach Anspruch 10 oder 11, wobei das Ausbilden des Gitters (11) das Spritzgießen des Gitters (11) umfasst.

13. Verfahren nach einem der Ansprüche 10 bis 12, wobei das Ausbilden des Gitters (11) das Ausbilden einer Gewebebahn umfasst, und wobei das Verfahren ferner das Überspritzen der Gewebebahn und das Teilen der überformten Gewebebahn umfasst, um eine Vielzahl von Mattendichtungen (10, 22) herzustellen.

14. Verfahren nach einem der Ansprüche 10 bis 12, wobei das Ausbilden des Gitters (11) das Ausbilden einer Gewebebahn umfasst und wobei das Verfahren ferner das Abtrennen eines Gewebebandes von der Gewebebahn umfasst, um das Gitter (11) bereitzustellen.

## Revendications

1. Joint compressible (10, 22) pour un connecteur électrique (20), comprenant
une pluralité de trous traversants (14, 14a, 14b, 22a) s'étendant dans une direction de trou traversant à travers le joint compressible (10, 22) ;
une grille (11) d'un premier matériau ayant des mailles de grille (11a) et étant agencée de sorte que les trous traversants (14, 14a, 14b, 22a) s'étendent à travers les mailles de grille (11a) ;
une première couche de matériau (12) d'un deuxième matériau disposée sur un premier côté de la grille (11) ; et
une deuxième couche de matériau (13) d'un troisième matériau disposée sur un deuxième côté de la grille (11) opposé au premier côté ; et dans lequel
le premier matériau de la grille (11) présente un module de compression plus grand que le deuxième matériau de la première couche de matériau (12) et le troisième matériau de la deuxième couche de matériau (13),
**caractérisé en ce que**
la grille (11) est constituée d'une bande de tissu ou d'un filet de fibres, en particulier d'un filet de fibres en résine synthétique et
**en ce que**
l'épaisseur de la grille (11) dans la direction de trou traversant est d'au plus 1/100 à 1/10 ou 1/100 à 1/80 ou 1/50, en particulier 1/60 à 1/30, de l'épaisseur de la première couche de matériau (12) dans la direction de trou traversant et de l'épaisseur de la deuxième couche de matériau (13) dans la direction de trou traversant.

2. Joint compressible (10, 22) selon la revendication 1, dans lequel la première couche de matériau (12) est formée d'un seul tenant avec la deuxième couche de matériau (13).

3. Joint compressible (10, 22) selon la revendication 2, dans lequel la grille (11) est surmoulée avec les première et deuxième couches de matériau (13).

4. Joint compressible (10, 22) selon l'une des revendications précédentes, dans lequel les deuxième et troisième matériaux sont ou comprennent des matériaux silicone, caoutchouc ou polymère et, en particulier, le deuxième matériau et le troisième matériau sont identiques l'un à l'autre.

5. Joint compressible (10, 22) selon l'une des revendications précédentes, dans lequel chacun des trous traversants (14, 14a, 14b, 22a) a la même surface de section transversale perpendiculaire à la direction de trou traversant.

6. Joint compressible (10, 22) selon la revendication 5, dans lequel la taille de mailles de la grille (11) est plus grande que les surfaces de section transversale des trous traversants (14, 14a, 14b, 22a) dans les première et deuxième couches de matériau (12, 13).

7. Joint compressible (10, 22) selon l'une des revendications précédentes, dans lequel les trous traversants (14, 14a, 14b, 22a) ont des surfaces de section transversale différentes perpendiculaires à la direction de trou traversant.

8. Joint compressible (10, 22) selon la revendication 7, dans lequel
la grille (11) a une taille de maille constante qui est plus grande que la plus grande surface de section transversale des trous traversants (14, 14a, 14b, 22a) dans les première et deuxième couches de matériau (12, 13) ; et/ou
pour chaque trou traversant (14, 14a, 14b, 22a), la surface de section transversale de la maille (11a) de la grille (11) qui lui est associée est plus grande que la surface de section transversale du trou traversant.

9. Connecteur multipolaire (20) comprenant une fiche (21) et une fiche homologue (23) et un joint compressible (10, 22) selon l'une des revendications précédentes, qui, à l'état fermé du connecteur (20), est agencé entre la fiche (21) et la fiche homologue (23).

10. Procédé de fabrication d'un joint compressible (10, 22) pour un connecteur électrique (20) comprenant les étapes suivantes :
former une grille (11) à partir d'un premier matériau ;
former une première couche de matériau (12) d'un deuxième matériau sur un premier côté de la grille (11) ; et
former une deuxième couche de matériau (13) d'un troisième matériau sur un deuxième côté de la grille (11) opposé au premier côté ; et dans lequel
le premier matériau de la grille (11) présente un module de compression plus grand que le deuxième matériau de la première couche de matériau (12) et le troisième matériau de la deuxième couche de matériau (13) et
**caractérisé en ce que**
la grille (11) est constituée d'une bande de tissu ou d'un filet de fibres, en particulier d'un filet de fibres en résine synthétique et
**en ce que**
l'épaisseur de la grille (11) dans la direction de trou traversant est d'au plus 1/100 à 1/10 ou 1/100 à 1/80 ou 1/50, en particulier 1/60 à 1/30, de l'épaisseur de la première couche de matériau (12) dans la direction de trou traversant et de l'épaisseur de la deuxième couche de matériau (13) dans la direction de trou traversant.

11. Procédé selon la revendication 10, dans lequel la formation des première et deuxième couches de matériau (13) comprend le surmoulage de la grille (11) avec les deuxième et troisième matériaux.

12. Procédé selon la revendication 10 ou 11, dans lequel la formation de la grille (11) comprend le moulage par injection de la grille (11).

13. Procédé selon l'une quelconque des revendications 10 à 12, dans lequel la formation de la grille (11) comprend la formation d'une nappe de tissu, et dans lequel le procédé comprend en outre le surmoulage de la nappe de tissu et la division de la nappe de tissu surmoulée pour produire une pluralité de joints compressibles (10, 22).

14. Procédé selon l'une quelconque des revendications 10 à 12, dans lequel la formation de la grille (11) comprend la formation d'une nappe de tissu, et dans lequel le procédé comprend en outre la séparation d'une bande de tissu de la nappe de tissu pour fournir la grille (11).
